# EUROPÄISCHE PATENTSCHRIFT

(11) **EP 1 557 317 B1**
(45) Veröffentlichungstag und Bekanntmachung des Hinweises auf die Patenterteilung: **12.03.2008**
(21) Anmeldenummer: 04105954.4
(22) Anmeldetag: 22.11.2004
(51) Int. Cl.: B60L 11/18, B60T 7/04, B62D 5/00

(54) **Vorrichtung zur Energieversorgung eines Hybridfahrzeugs mit mindestens einem x-by-wire-System**
Power supply device for a hybrid vehicle having at least one x-by-wire system
Alimentation pour un véhicule hybride avec de moins une système x-by-wire

(30) Priorität: 22.01.2004 DE 102004003302
(43) Veröffentlichungstag der Anmeldung: 27.07.2005
(73) Patentinhaber: ROBERT BOSCH GMBH, 70442 Stuttgart (DE)
(72) Erfinder: Haas, Wolfgang, 70435, Stuttgart (DE)

(56) Entgegenhaltungen:
- EP-B- 1 053 153
- EP-B- 1 175 324
- DE-A- 10 104 194
- US-A1- 2003 037 974

## Beschreibung

Die Erfindung betrifft eine Vorrichtung zur Energieversorgung eines Hybridfahrzeugs, welches mindestens ein x-by-wire-System aufweist.

### Stand der Technik

Aus der DE 101 28 758 A1 sind ein Verfahren und eine Einrichtung zur Ansteuerung eines Hybridfahrzeugs bekannt. Bei einem derartigen Fahrzeug erfolgt der Antrieb mittels eines Verbrennungsmotors und/oder mittels eines Elektromotors, wobei der Anteil des elektromotorischen Antriebs in Abhängigkeit von die Fahrstrecke betreffenden, der Betriebssteuerung des Fahrzeugs mitgeteilten Daten unter Berücksichtigung eines Ladezustandes eines Energiespeichers gesteuert wird. Insbesondere gehen in die Berechnung des Anteils des elektromotorischen Antriebs auch Daten ein, die Höheninformationen entsprechen und beispielsweise von einem Navigationssystem des Hybridfahrzeugs zur Verfügung gestellt werden.

Aus der DE 102 08 652 A1 ist ein Verfahren zur Ladezustandsermittlung einer Batterie insbesondere eines Hybridfahrzeugs bekannt. Bei diesem bekannten Verfahren werden zunächst wenigstens zwei Messwertepaare für Spannung und Strom erfasst. Anschließend erfolgt ein Korrigieren der erfassten Messwertepaare auf sich im eingeschwungenen Zustand ergebende Werte unter Berücksichtigung einer Batterieersatzschaltung. Danach werden die korrigierten Messwertepaare interpoliert und es wird ein Ruhespannungswert beim Stromwert 0 ermittelt. Schließlich erfolgt eine Bestimmung des Ladezustands mittels eines ersten vorbestimmten Zusammenhangs zwischen ermittelter Ruhespannung und Ladezustand.

Aus der DE 101 12 514 A1 ist ein x-by-wire-System für ein Fahrzeug bekannt. Ein derartiges System hat keine mechanische und auch keine hydraulische Rückfallebene. Bekannte derartige Systeme sind beispielsweise ein brake-by-wire-System und ein steer-by-wire-System. Für derartige Systeme sind Sicherheitskonzepte mit Redundanz notwendig, da elektrische Komponenten je nach Sicherheitskonzept ohne Vorwarnung ausfallen können. Dieses Erfordernis der Redundanz kann beispielsweise durch eine Einführung von Bauteil- oder Funktionsredundanzen erfüllt werden.

Aus der DE 199 06 305 A1 ist eine Spannungsversorgungsschaltung für sicherheitsrelevante Systeme in Kraftfahrzeugen bekannt, beispielsweise für Elektroschlösser des Fahrzeugs. Derartigen Systemen sind eigene Zusatzbatterien zugeordnet, die mithilfe einer Ladeschaltung und Umschalteinheit sowie über Mittel zur Überwachung und Verteilung der elektrischen Energie mit einer Hauptbatterie verbindbar sind. Im üblichen Betrieb werden die sicherheitsrelevanten Systeme aus der ihnen zugeordneten Zusatzbatterie versorgt. Bei einem Defekt der Zusatzbatterie oder bei einer zu stark entladenen Zusatzbatterie erfolgt eine Umschaltung und die sicherheitsrelevanten Systeme werden direkt aus der Fahrzeugbatterie versorgt. Dadurch wird sichergestellt, dass bei einem Ausfall der Zusatzbatterie noch ausreichend elektrische Energie zur Verfügung steht, da die Fahrzeugbatterie üblicherweise ausreichend geladen ist. Eine Überwachungsschaltung für die Zustandsbatterie ist nicht vorgesehen und es steht dennoch ein redundantes Spannungsversorgungssystem zur Verfügung.

Aus der US 2003/037974 A1 (D1) ist ein Brennstoffzellenfahrzeug mit einer redundanten Energieversorgung für x-by-wire-Systeme, die beispielsweise eine elektrische Bremse umfassen, bekannt. Die Energie wird beispielsweise mittels einer Brennstoffzelle erzeugt, die aus gespeichertem Wasserstoffgas Strom erzeugt. Weiterhin ist eine Batterie vorhanden, die die elektrische Energie speichert. Angetrieben wird das Fahrzeug mittels Elektromotoren, die den Rädern des Fahrzeugs zugeordnet sind. Weiterhin ist eine Überwachungseinheit vorhanden, die eine sichere Energieversorgung des x-by-wire-Systems ermöglicht. Im übrigen befasst sich die Entgegenhaltung aber mit einem optimierten Chassis, das für eine Vielzahl von Ausgestaltungen eingesetzt werden kann. Ein Hybridfahrzeug wird jedoch nicht erwähnt

Aus der EP-A-1 175 324 sind Vorrichtungen zur Energieversorgung bei x-by-wire-Systemen bekannt, insbesondere für elektrische Bremsen. Wie allgemein üblich bei der Energieversorgung von elektrischen Bremsen ist eine redundante Energieversorgung vorgesehen. Ein Hybridfahrzeug wird nicht erwähnt.

### Vorteile der Erfindung

Eine Vorrichtung zur Energieversorgung eines Hybridfahrzeugs mit mindestens einem x-by-wire-System mit den Merkmalen des Anspruchs 1 weist demgegenüber den Vorteil auf, dass sie auf kostengünstige Weise und mit geringem technischen Aufwand zwei unabhängige Energiespeicher für das x-by-wire-System bereitstellt, die jeweils mit einer Zustandserkennung bzw. -überwachung ausgerüstet sind. Dieser Vorteil wird insbesondere dadurch erzielt, dass einer der Energiespeicher eine mit einer Überwachungseinheit versehene Fahrzeugbatterie ist und der andere Energiespeicher, der als Rückfallposition dient, die zur Energieversorgung des Elektromotors vorgesehene Traktionsbatterie ist. Da eine derartige Traktionsbatterie in Hybridfahrzeugen ohnehin vorhanden ist, da eine derartige Traktionsbatterie ohnehin mit einer Batterieüberwachung versehen ist und da in vielen hochwertigen Fahrzeugen beispielsweise ohnehin schon eine Bordnetzbatterie vorgesehen ist, ist insbesondere bei derartigen Fahrzeugen der zusätzliche Aufwand zur Realisierung der erfindungsgemäßen Vorrichtung gering.

Ferner wird erfindungsgemäß die Möglichkeit dafür geschaffen, in Betriebssituationen, in denen kein Defekt vorliegt und lediglich die Fahrzeugbatterie die zur ausreichenden Versorgung des x-by-wire-Systems nötige Energie nicht mehr vollständig zur Verfügung stellen kann, die Energieversorgung des x-by-wire-Systems aus beiden Batterien vorzunehmen. Dies hat den Vorteil, dass der der Traktionsbatterie entnommene Energieanteil vergleichsweise niedrig gehalten werden kann.

Die Vorteile der Merkmale des Anspruchs 2 bestehen darin, dass der Versorgungsweg zwischen der Traktionsbatterie und dem x-by-wire-System gezielt geöffnet und geschlossen werden kann. Dadurch werden im Normalbetrieb, bei welchem der Schalter geöffnet ist, unerwünschte Rückwirkungen des Bordnetzes auf den Antriebsstrang sowie Rückwirkungen des Antriebsstrangs auf das Bordnetz sicher vermieden.

Mit den Merkmalen des Anspruchs 3 wird in vorteilhafter Weise erreicht, dass in einer Betriebsart, in welcher die Energieversorgung des x-by-wire-Systems aus der Traktionsbatterie erfolgt, das x-by-wire-System vom übrigen Bordnetz abgetrennt ist. Dies ist insbesondere dann von Vorteil, wenn im übrigen Bordnetz ein Defekt aufgetreten ist, der zu einer unzureichenden Energieversorgung des x-by-wire-Systems aus der Fahrzeugbatterie geführt hat.

Um in allen Betriebssituationen eine ausreichende Energieversorgung sowohl des x-by-wire-Systems als auch des Elektromotors sicherzustellen, wird die Nennleistung der Traktionsbatterie in bevorzugter Weise größer gewählt als es eigentlich für die Traktionsanwendung notwendig ist. Dieser Nachteil der Notwendigkeit einer Traktionsbatterie mit größerer Nennleistung wird durch den erzielten Vorteil, auf eine eigene zweite Batterie mit eigener Batterieüberwachung zum Zwecke der Schaffung der Rückfallposition verzichten zu können, mehr als kompensiert.

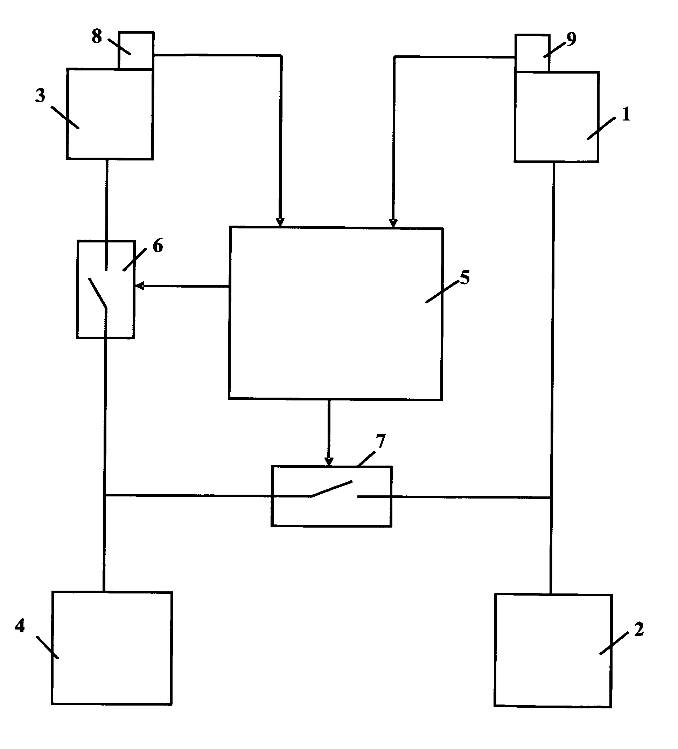

Weitere vorteilhafte Eigenschaften der Erfindung ergeben sich aus deren beispielhafter Erläuterung anhand der Figur.

### Zeichnung

In der Zeichnung ist eine Blockdarstellung einer Vorrichtung zur Energieversorgung eines Hybridfahrzeugs mit einem x-by-wire-System gezeigt.

### Beschreibung

Die in der Zeichnung dargestellte Vorrichtung zeigt eine Traktionsbatterie 1, die zur Energieversorgung des Elektromotors 2 eines Hybridfahrzeugs dient. Zur Überwachung des Zustandes der Traktionsbatterie 1 ist eine Überwachungseinheit 9 vorgesehen, die an ihrem Ausgang ein den Zustand der Traktionsbatterie 1 beschreibendes Zustandssignal zur Verfügung stellt. Dieses Zustandssignal wird einer Steuereinheit 5 zugeführt.

Weiterhin enthält die gezeigte Vorrichtung mindestens ein x-by-wire-System 4. Bei diesem System handelt es sich beispielsweise um ein brake-by-wire-system oder ein steer-by-wire-System, d. h. um ein elektrohydraulisches Bremssystem oder um ein elektrisches Lenksystem. Die Energieversorgung des x-by-wire-Systems 4 erfolgt von einer Fahrzeugbatterie 3, bei der es sich beispielsweise um die Bordnetzbatterie handelt, über einen Schalter 6, der sich im Normalbetrieb im leitenden Zustand befindet. Zur Überwachung des Zustands der Fahrzeugbatterie 3 ist eine Überwachungseinheit 8 vorgesehen. Diese stellt an ihrem Ausgang ein den Zustand der Fahrzeugbatterie 3 beschreibendes Zustandssignal zur Verfügung, welches der Steuereinheit 5 zugeführt wird. Dieses Zustandssignal stellt bei schlechtem Zustand der Fahrzeugbatterie 3 ein Fehlersignal dar, anhand dessen die Steuereinheit 5 erkennt, dass die Energieversorgung des x-by-wire-Systems 4 aus der Fahrzeugbatterie 3 unzureichend ist.

Die Steuereinheit 5 gibt als Reaktion auf den Empfang eines derartigen Fehlersignals eine Energieversorgung des x-by-wire-Systems 4 durch die Traktionsbatterie 1 frei, so dass die Energieversorgung des x-by-wire-Systems von der Traktionsbatterie 1 übernommen wird. Zu diesem Zweck ist zwischen der Traktionsbatterie 1 und dem x-by-wire-System 4 ein Schalter 7 vorgesehen. Dieser ist im Normalbetrieb geöffnet, so dass die Traktionsbatterie 1 vom x-by-wire-System 4 abgetrennt ist. Liegt das oben genannte Fehlersignal vor, dann generiert die Steuereinheit 5 ein den Schalter 7 durchlässig schaltendes Steuersignal, so dass das x-by-wire-System 4 aus der Traktionsbatterie 1 mit Energie versorgt wird.

Gleichzeitig mit dem den Schalter 7 durchlässig schaltenden Steuersignal erzeugt die Steuereinheit 5 auch ein Steuersignal für den Schalter 6, aufgrund dessen der Schalter 6 in den geöffneten Zustand gebracht wird. Dies hat zur Folge, dass das x-by-wire-System 4 während der Energieversorgung aus der Traktionsbatterie 1 vom übrigen Bordnetz abgetrennt ist, so dass keine Rückwirkungen des Bordnetzes auf das x-by-wire-System 4 auftreten können.

Eine vorteilhafte Ausgestaltung der Erfindung besteht darin, mittels der Überwachungseinheit 8 nicht nur den Zustand der Fahrzeugbatterie 3 zu überwachen, sondern zusätzlich auch im Bordnetz auftretende Störungen zu detektieren, insbesondere im Bordnetz auftretende Defekte. Treten derartige Störungen auf, die trotz eines guten Zustands der Fahrzeugbatterie 3 zu einer unzureichenden Energieversorgung des x-by-wire-Systems aus der Fahrzeugbatterie 3 führen, dann wird das Auftreten derartiger Störungen ebenfalls in Form eines Fehlersignals an die Überwachungseinheit 5 gemeldet. Diese stellt als Reaktion auf das Fehlersignal ebenso wie bei einem durch einen schlechten Batteriezustand ausgelösten Fehlersignal ein den Schalter 7 durchlässig schaltendes Steuersignal und ein den Schalter 6 öffnendes Steuersignal zur Verfügung. Folglich wird auch in diesem Fall die weitere Energieversorgung des x-by-wire-Systems 4 durch die Traktionsbatterie 1 vorgenommen.

Eine alternative Ausführungsform der Erfindung besteht darin, dass die Überwachungseinheit 8 beim Vorliegen eines unzureichenden Zustandes der Fahrzeugbatterie 3 ein erstes Fehlersignal und beim Vorliegen von Störungen im Bordnetz ein zweites Fehlersignal generiert, wobei sich das zweite Fehlersignal vom ersten Fehlersignal unterscheidet.

Liegt das zweite Fehlersignal vor, dann stellt die Steuereinheit 5 als Reaktion auf dieses zweite Fehlersignal ein den Schalter 7 durchlässig schaltendes Steuersignal und ein den Schalter 6 öffnendes Steuersignal zur Verfügung. Dies hat zur Folge, dass während der Energieversorgung des x-by-wire-Systems 4 aus der Traktionsbatterie 1 das x-by-wire-System 4 vom gestörten Bordnetz abgetrennt ist, so dass keine Rückwirkungen vom Bordnetz auf das x-by-wire-System und den Antriebsstrang des Hybridfahrzeugs auftreten.

Liegt das erste Fehlersignal vor, dann stellt die Steuereinheit 5 als Reaktion auf dieses erste Fehlersignal ein den Schalter 7 durchlässig schaltendes Steuersignal zur Verfügung und belässt den Schalter 6 im durchlässigen Zustand. Folglich wird bei dieser alternativen Ausführungsform die Energieversorgung des x-by-wire-Systems 4 aus beiden Batterien 1 und 3 vorgenommen.

Ein weiterer Vorteil der Erfindung besteht darin, zusätzlich zu den von der Überwachungseinheit 8 gelieferten Signalen die von der Überwachungseinheit 9 zur Verfügung gestellten Zustandssignale der Traktionsbatterie 1 zur Steuerung der Energieversorgung des x-by-wire-Systems 4 und des Elektromotors 2 zu berücksichtigen. Liegt beispielsweise ein Fehlersignal der Überwachungseinheit 8 vor und signalisiert das von der Überwachungseinheit 9 gelieferte Zustandssignal, dass die Ladung der Traktionsbatterie 1 nicht ausreicht, um sowohl den Elektromotor 2 als auch das x-by-wire-System 4 mit Energie zu versorgen, dann kann die dem Elektromotor zur Verfügung gestellte Energie reduziert werden. Damit wird dem Umstand Rechnung getragen, dass x-by-wire-Systeme für die Sicherheit des Fahrers und des Fahrzeugs eine höhere Bedeutung haben als der Antrieb des Fahrzeugs.

Vorzugsweise ist die Nennleistung der Traktionsbatterie 1 so dimensioniert, dass die Traktionsbatterie 1, solange sich in einem guten Zustand befindet, eine gleichzeitige vollständige Energieversorgung des Elektromotors 2 und des x-by-wire-Systems 4 gewährleisten kann. Dies erfordert im Vergleich zu bekannten Lösungen eine etwas teurere Traktionsbatterie. Dieser Preisnachteil wird jedoch durch den Vorteil, auf eine zusätzliche Batterie mit zugehöriger Überwachungseinheit als Rückfallposition verzichten zu können, mehr als ausgeglichen.

## Patentansprüche

1. Vorrichtung zur Energieversorgung eines Hybridfahrzeugs mit mindestens einem x-by-wire-System, mit
- einer zur Energieversorgung des Elektromotors (2) des Hybridfahrzeugs vorgesehenen Traktionsbatterie (1),
- einer zur Energieversorgung des x-by-wire-Systems (4) vorgesehenen, von der Traktionsbatterie (1) unabhängigen Fahrzeugbatterie (3),
- einer Überwachungseinheit (8), die die Energieversorgung des x-by-wire-Systems (4) aus der Fahrzeugbatterie (3) überwacht und bei unzureichender Energieversorgung des x-by-wire-Systems aus der Fahrzeugbatterie ein Fehlersignal zur Verfügung stellt, und
- einer mit der Überwachungseinheit (8) verbundenen Steuereinheit (5), die das von der Überwachungseinheit zur Verfügung gestellte Fehlersignal empfängt und als Reaktion auf dieses Fehlersignal eine Energieversorgung des x-by-wire-Systems (4) durch die Traktionsbatterie (1) freigibt
- und eine weitere Überwachungseinheit (9) vorgesehen ist die derart ausgebildet ist, daß sie den Zustand der Traktionsbatterie (1) überwacht
- und die weitere Überwachungseinheit (9) derart ausgebildet ist, daß sie der Steuereinheit (5) ein den Zustand der Traktionsbatterie (1) beschreibendes Zustandssignal zuführt, und
- die Steuereinheit (5) derart ausgebildet ist, daß sie die Energieversorgung des x-by-wire-Systems (4) und des Elektromotors (2) in Abhängigkeit von diesem Zustandssignal steuert.

2. Vorrichtung nach Anspruch 1, **dadurch gekennzeichnet,dass**sie zwischen der Traktionsbatterie (1) und dem x-by-wire-System (4) einen Schalter (7) aufweist und die Steuereinheit (5) derart ausgebildet ist, daß sie als Reaktion auf das empfangene Fehlersignal ein den Schalter (7) durchlässig schaltendes Steuersignal erzeugt.

3. Vorrichtung nach Anspruch 1 oder 2, **dadurch gekennzeichnet, dass** sie zwischen der Bordnetzbatterie (3) und dem x-by-wire-System (4) einen Schalter (6) aufweist und die Steuereinaheit (5) derart ausgebildet ist, daß sie als Reaktion auf das empfangene Fehlersignal ein den Schalter (6) öffnendes Steuersignal erzeugt.

4. Vorrichtung nach einem der vorhergehenden Ansprüche, **dadurch gekennzeichnet, dass** die Überwachungseinheit (8) derart ausgebildet ist, daß sieden Zustand der Fahrzeugbatterie (3) überwacht und das Fehlersignal dann generiert, wenn der Zustand der Fahrzeugbatterie zur Energieversorgung des x-by-wire-Systems (4) nicht mehr ausreicht.

5. Vorrichtung nach einem der vorhergehenden Ansprüche, **dadurch gekennzeichnet, dass** die Überwachungseinheit (8) derart ausgebildet ist, daß sie ein Auftreten von Fehlern im Bordnetz des Hybridfahrzeugs detektiert, die zu einer nicht ausreichenden Energieversorgung des x-by-wire-Systems (4) führen, und auch beim Erkennen derartiger Fehler ein Fehlersignal generiert.

6. Vorrichtung nach einem der vorhergehenden Ansprüche, **dadurch gekennzeichnet, dass** die Traktionsbatterie (1) eine Nennleistung aufweist, die zur gleichzeitigen vollständigen Energieversorgung des Elektromotors (2) und des x-by-wire-Systems (4) ausreicht.

## Claims

1. Apparatus for supplying power to a hybrid vehicle having at least one x-by-wire system, comprising
- a traction battery (1) which is provided for supplying power to the electric motor (2) of the hybrid vehicle,
- a vehicle battery (3) which is provided for supplying power to the x-by-wire system (4) and is independent of the traction battery (1),
- a monitoring unit (8) which monitors the power supply to the x-by-wire system (4) from the vehicle battery (3) and provides a fault signal if the power supply to the x-by-wire system from the vehicle battery is insufficient, and
- a control unit (5) which is connected to the monitoring unit (8) and receives the fault signal provided by the monitoring unit and enables power to be supplied to the x-by-wire system (4) by the traction battery (1) as a reaction to this fault signal.
- and a further monitoring unit (9) is provided which is formed in such a way that it monitors the state of the traction battery (1)
- and the further monitoring unit (9) is formed in such a way that it supplies a state signal, which describes the state of the traction battery (1), to the control unit (5), and
- the control unit (5) is formed in such a way that it controls the power supply to the x-by-wire system (4) and to the electric motor (2) as a function of this state signal.

2. Apparatus according to Claim 1, **characterized in that** it has a switch (7) between the traction battery (1) and the x-by-wire system (4), and the control unit (5) is formed in such a way that it generates a control signal, which switches the switch (7) such that it transmits, as a reaction to the received fault signal.

3. Apparatus according to Claim 1 or 2, **characterized in that** it has a switch (6) between the on-board electrical system battery (3) and the x-by-wire system (4), and the control unit (5) is formed in such a way that it generates a control signal which opens the switch (6) as a reaction to the received fault signal.

4. Apparatus according to one of the preceding claims, **characterized in that** the monitoring unit (8) is formed in such a way that it monitors the state of the vehicle battery (3) and generates the fault signal when the state of the vehicle battery is no longer sufficient to supply power to the x-by-wire system (4).

5. Apparatus according to one of the preceding claims, **characterized in that** the monitoring unit (8) is formed in such a way that it detects the occurrence of faults in the on-board electrical system of the hybrid vehicle which lead to an insufficient power supply to the x-by-wire system (4), and also generates a fault signal when such faults are identified.

6. Apparatus according to one of the preceding claims, **characterized in that** the traction battery (1) has a rated power which is sufficient to fully supply power to the electric motor (2) and to the x-by-wire system (4) at the same time.

## Revendications

1. Dispositif d'alimentation en énergie d'un véhicule hybride ayant au moins un système x-by-wire, comprenant
- une batterie de traction (1) prévue pour l'alimentation en énergie du moteur électrique (2) du véhicule hybride,
- une batterie de véhicule (3) indépendante de la batterie de traction (1) prévue pour l'alimentation en énergie du système x-by-wire (4),
- une unité de surveillance (8) qui surveille l'alimentation en énergie du système x-by-wire (4) à partir de la batterie (3) du véhicule et, en cas d'alimentation insuffisante du système x-by-wire à partir de la batterie du véhicule, émet un signal de défaut et
- une unité de commande (5) reliée à l'unité de surveillance (8) pour recevoir le signal de défaut par l'unité de surveillance et libérer comme réaction à ce signal de défaut, une alimentation en énergie du système x-by-wire (4) par la batterie de traction (1), et
- une autre unité de surveillance (9) réalisée pour surveiller l'état de la batterie de traction (1),
- une autre unité de surveillance (9) réalisée pour fournir à l'unité de commande (5), un signal d'état décrivant l'état de la batterie de traction (1) et
- l'unité de commande (5) est réalisée pour commander l'alimentation en énergie du système x-by-wire et du moteur électrique (2) en fonction de ce signal d'état.

2. Dispositif selon la revendication 1,
**caractérisé en ce que**
l'alimentation en énergie comporte un commutateur (7) entre la batterie de traction (1) et le système x-by-wire (4), et l'unité de commande (5) est réalisée pour générer un signal de commande rendant passant le commutateur (7) en réaction au signal de défaut reçu.

3. Dispositif selon la revendication 1 ou 2,
**caractérisé par**
un commutateur (6) entre la batterie du réseau embarqué (3) et le système x-by-wire (4) et l'unité de commande (5) est réalisée pour en réaction au signal de défaut reçu, générer un signal de commande ouvrant la liaison par le commutateur 6.

4. Dispositif selon l'une des revendications précédentes,
**caractérisé en ce que**
l'unité de surveillance (8) est réalisée pour surveiller l'état de la batterie (3) et générer le signal de défaut si l'état de la batterie du véhicule n'est plus suffisant pour assurer l'alimentation en énergie du système x-by-wire (4).

5. Dispositif selon l'une des revendications précédentes,
**caractérisé en ce que**
l'unité de surveillance (8) est conçue pour détecter l'arrivée d'un défaut dans le réseau embarqué du véhicule hybride, qui peut entraîner une alimentation insuffisante en énergie du système x-by-wire (4) et génère également un signal de défaut lors de la détection d'un tel défaut.

6. Dispositif selon l'une des revendications précédentes,
**caractérisé en ce que**
la batterie de traction (1) a une puissance nominale suffisante pour assurer en même temps l'alimentation totale en énergie du moteur électrique (2) et du système x-by-wire (4).
